# EUROPÄISCHE PATENTSCHRIFT

(11) **EP 1 076 024 B1**
(45) Veröffentlichungstag und Bekanntmachung des Hinweises auf die Patenterteilung: **29.03.2006**
(21) Anmeldenummer: 00114343.7
(22) Anmeldetag: 04.07.2000
(51) Int. Cl.: B65G 67/60

(54) **Schiffsentlader mit Trogkettenförderer**
Unloading device for ships with troughed chain conveyor
Dispositif de déchargement pour navires avec transporteur en masse

(30) Priorität: 12.08.1999 DE 19937653
(43) Veröffentlichungstag der Anmeldung: 14.02.2001
(73) Patentinhaber: Bühler AG, 9240 Uzwil (CH)
(72) Erfinder: Haymoz, Robert, 9240 Uzwil (CH)
(74) Vertreter: Frommhold, Joachim

(56) Entgegenhaltungen:
- EP-A- 0 025 981
- EP-A- 0 039 487
- DE-A- 4 204 251
- US-A- 4 467 910
- US-A- 5 807 054
- PATENT ABSTRACTS OF JAPAN vol. 1996, no. 10, 31. Oktober 1996 (1996-10-31) & JP 08 157074 A (MITSUBISHI HEAVY IND)

## Beschreibung

Die Erfindung betrifft einen Schiffsentlader mit einem Trogkettenförderer, insbesondere einen Portalkran zur steilen Entladung von Schiffen und sonstigen Behältnissen gemäss dem Oberbegriff des Patentanspruchs 1.

Portalkrane mit Trogkettenförderern bzw. auch Trogkettenförderer als solche sind bekannt. So zeigt die EP-A-025981 einen Trogkettenförderer mit einem Fördertrog und einem Rücklauftrog, die sich zwischen einem Fuss und einem Entladekopf erstrecken. Eine umlaufende Förderkette ist mit von unten offenen Mitnehmern versehen. Das abzugebende Fördergut gelangt durch Schwerkraftentleerung über abwärts gerichtete Rutschen und teilweise durch Fliehkraftentleerung zu einem Kanal, dessen Eintrittsöffnung sich in Richtung parallel zur Umlaufebene über den Rücklauftrog hinaus erstreckt. Bei Ausbildung der Mitnehmer als Bügel erstreckt sich die Eintrittsöffnung seitlich an die Umlaufebene angrenzend an den Rücklauftrog und den Fördertrog. Auf der vom Fördertrog abgewandten Seite des Rücklauftroges ist eine, das abgeschleuderte Material aus der Umlaufebene seitlich in den sich über den Rücklauftrog hinaus erstreckenden Teil der Eintrittsöffnung lenkende weitere Rutsche vorgesehen.

Aus der DE-A-4429536 ist ein stetigfördernder Schiffsentlader bekannt, der einen Senkrechtförderer mit einem, auf einer Drehplattform heb- und senkbar angeordneten Ausleger mit einer auf einem Ponton angeordneten Portalbrücke mit Förderbändem und dergleichen zum entladen von Schüttgut aus Seeschiffen aufweist. Der Senkrechtförderer ist mit dem Ausleger heb- und senkbar und kann unabhängig hiervon auch längs und quer zur Richtung des Auslegers geschwenkt werden.

Eine weitere Einrichtung zum Beladen von Schiffen mit Schüttgut zeigt die DE-A-19505372. Diese weist ebenfalls einen Ausleger auf, der auf einem parallel zu dem zu beladenden Schiff verfahrbaren Portal heb- und senkbar angeordnet ist, wobei der Ausleger ein Förderband trägt.

Der Erfindung liegt die Aufgabe zugrunde, einen gattugsgemässen Schiffsentlader, insbesondere einen Portalkran mit einem Trogkettenförderer so weiter zu entwickeln, dass dessen Gebrauchseigenschaften verbessert werden. Die Aufgabe ist an Hand der kennzeichnenden Merkmale des Patentanspruchs gelöst.

Auf Grund der Ausgestaltung des Schachtes des Trogkettenförderers mit konischem Einzug wird der Füllgrad erhöht und der Verschleiss sinkt.

Die Anbringung einer Füllstandssonde am Fuss des Trogkettenförderers ermöglicht eine "sink in" Automatik und damit eine Leistungserhöhung bei geringerer Belastung des Heberstahlbaus. Vorteilhafte weiterführende Ausbildungen sind in den Unteransprüchen aufgeführt.

Ebenso ist der Schacht bevorzugt sphärisch gelagert, um eine Übertragung von Torsionskräften vom Schiff auf den Schiffsentlader zu vermeiden.

Die Erfindung ist nachfolgend in einem Ausführungsbeispiel an Hand einer Zeichnung näher beschrieben. In der Zeichnung zeigen die
Fig. 1: eine Seitenansicht des Schiffsentladers

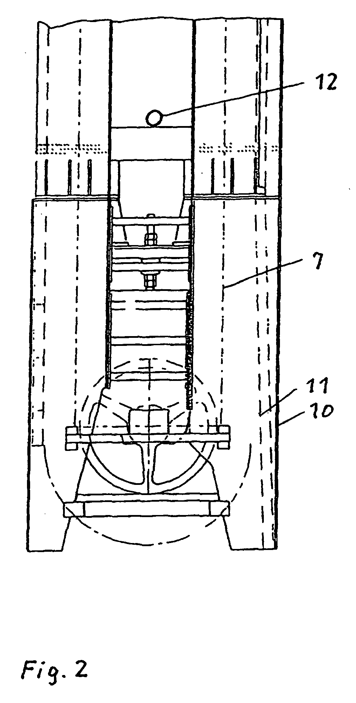

Fig. 2: den Fuss des Trogkettenförderers

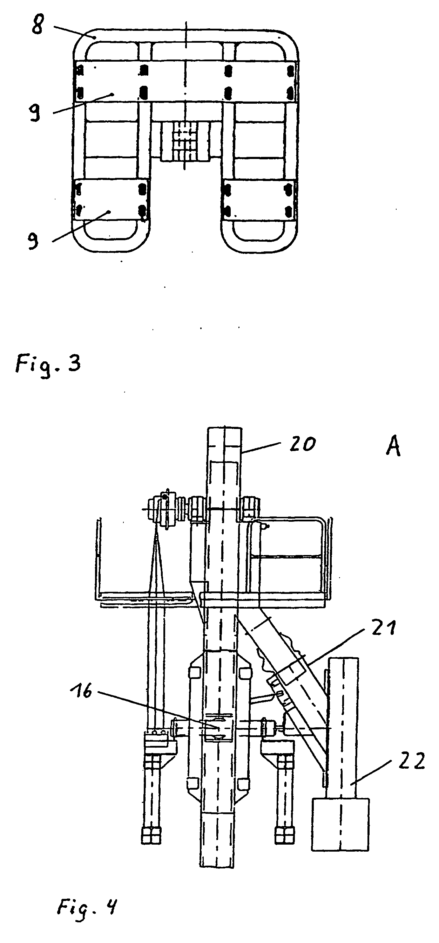

Fig. 3: einen Mitnehmer der Förderkette
Fig. 4: eine Drehgosse.

Ein Schiffsentlader 1 weist einen Ausleger 2 auf, der auf einem, parallel zu einem nicht dargestellten Schiff verfahrbaren Portal 3 heb- und senkbar sowie schwenkbar angeordnet ist. Der Ausleger 2 trägt übliche Fördereinrichtungen, vorzugsweise ein Kettenförderer zum Transport des entnommenen Schüttgutes in, am Kai 4 befindliche Lagerbehältnise.

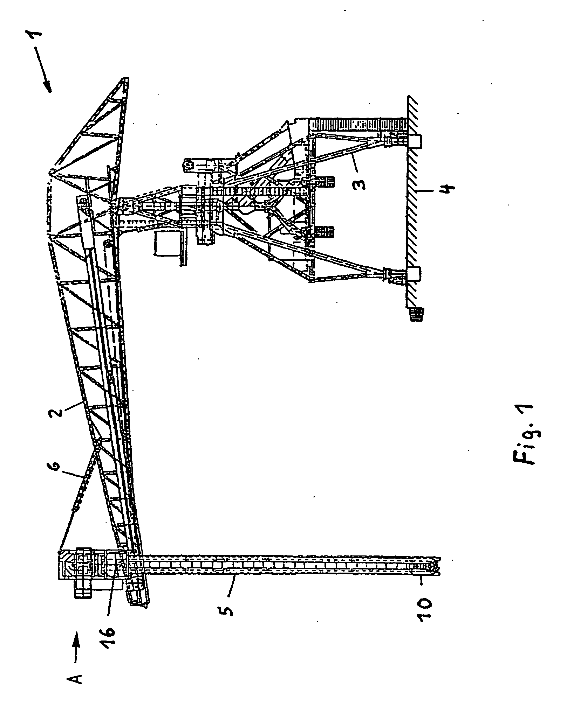

Am, dem Schiff zugewandten Ende des Auslegers 2 ist ein Trogkettenförderer 5 angeordnet, welcher ein Kicksystem mit einem, auf der Oberseite des Auslegers 2 angeordneten Hydraulikzylinder 6 aufweist (Kick-in, Kick-out). Der Trogkettenförderer 5 kann damit gegenüber der Längsachse des Auslegers 2 um mehr als 90° geschwenkt werden, in Abhängigkeit von der Arbeitsstellung des Auslegers 2. In der Fig. 1 ist die Nullstellung gezeigt.

Der Trogkettenförderer 5 weist ein sphärisches Lager 16 auf, um eine Übertragung von Torsionskräften, die vom Schiff herrühren zu vermeiden. Ein seitlicher Neigungsausgleich von ca. +/-10° ist möglich.

Im Trogkettenförderer 5, der im wesentlichen entsprechend der Offenbarung der EP-A-025981 aufgebaut ist, läuft eine Förderkette 7 mit Mitnehmern 8 um. In wählbarem Abstand sind Mitnehmer 8 mit Füllblechen 9 versehen, um die Restentleerung des Trogkettenförderers zu verbessem. Durch Antrieb eines Kettenrades läuft die Förderkette 7 um. Unten vom Fuss 10 aufgenommenes Schüttgut wird nun innerhalb des Fördertroges des Trogkettenförderers 5 als kontinuierliche Säule nach oben gefördert und gelangt gemäss EP-A-025981 in einen Förderkanal 20. Von diesem gelangt es über eine Drehgosse 21 und einen weiteren Kanal 22 staubfrei und stellungsunabhängig auf das Förderelement des Auslegers. Die Mitnehmer 8 und Füllbleche 9 können aus einem Kunststoff gefertigt sein, woraus eine höhere Lebensdauer sowie eine geringere Lärmentwicklung resultieren.

Durch wenden der Förderkette 7 können beide Schachtseiten genutzt werden.

Der Fuss 10 des Trogkettenförderers 5 ist mit einer Füllstandssonde 12 versehen. Diese Füllstandssonde 12 kann z. B. ein Schwimmer oder auch ein kapazitiver Sensor sein. Die Füllstandssonde 12 ermöglicht eine "sink in" Automatik, die ein absenken des Auslegers 2 je nach Füllungsgrad des Schiffes ermöglicht. Der Ausleger 2 kann mit den Bewegungen des Schiffes mitgehen, so dass nicht nur eine hohe Förderleistung gewährleistet ist, sondern auch eine Belastung des Heberstahlbaus vermieden wird.

Der Fuss 10 weist weiterhin einen Schacht mit konischem Einzug auf, wobei der Schacht schräg gestellte Wände 11 enthält. Diese Wände 11 ermöglichen einen besseren Produkteinzug und Füllgrad sowie eine Verringerung des Verschleisses von Förderkette 7 und Schacht.

### Verzeichnis der Kurzzeichen

- 1: Schiffsentlader
- 2: Ausleger
- 3: Portal
- 4: Kai
- 5: Trogkettenförderer
- 6: Hydraulikzylinder
- 7: Förderkette
- **8**: Mitnehmer
- 9: Füllblech
- 10: Fuss
- 11: Wand
- 12: Füllstandssonde
- 16: Lager
- 20: Förderkanal
- 21: Drehgosse
- 22: Kanal

## Patentansprüche

1. Schiffsentlader mit einem Ausleger (2), der auf einem verfahrbaren Portal (3) heb- und senkbar sowie schwenkbar angeordnet ist, wobei der Ausleger (2) übliche Fördereinrichtungen zum Transport von Schüttgut trägt und an einem Ende einen Trogkettenförderer (5) aufweist, welcher mit einem Fuss (10) zur Aufnahme von Schüttgut versehen ist, **dadurch gekennzeichnet, dass** der Fuss (10) mit einer Füllstandssonde (12) versehen ist die ein Absenken des Auslegers (2) je nach Füllungsgrad des Schiffes ermöglicht, und wobei der Ausleger (2) mit den Bewegungen des Schiffes mitgehen kann, und dass der Fuss einen Schacht mit konischem Einzug enthält, der durch schräg gestellte Wände (11) gebildet ist.

2. Schiffsentlader nach Anspruch 1, **dadurch gekennzeichnet, dass** der Trogkettenförderer (5) ein sphärisches Lager (16) aufweist.

3. Schiffsentlader nach Anspruch 1, **dadurch gekennzeichnet, dass** der Ausleger (2) eine Drehgosse (21) aufweist.

4. Schiffsentlader nach einem der Ansprüche 1 bis 3, **dadurch gekennzeichnet, dass** im Trogkettenförderer (5) eine Förderkette (7, 7') mit Mitnehmern (8) umläufs wobei einige Mitnehmer (8) mit Füllblechen (9) versehen sind.

5. Schiffsentlader nach Anspruch 4, **dadurch gekennzeichnet, dass** die Mitnehmer (8) und die Füllbleche (9) aus einem Kunststoff gefertigt sind.

## Claims

1. A ship unloader with an extension arm (2), which is liftably and lowerably as well as swivelably arranged on a traveling portal (3), wherein the extension arm (2) carries conventional conveying devices for transporting bulk material, and has a base (10) for accommodating bulk material, **characterized in that** the base (10) is provided with a fill level sensor (12) that enables a lowering of the extension arm (2) depending on the fill level of the ship, and wherein the extension arm (2) can follow the movements of the ship, and that the base contains a shaft with conical feeder, which is formed by inclined walls (11).

2. The ship unloader according to claim 1, **characterized in that** the chain trough conveyor (5) has a spherical bearing (16).

3. The ship unloader according to claim 1, **characterized in that** the extension arm (2) has a rotating gutter (21).

4. The ship unloader according to one of claims 1 to 3, **characterized in that** the chain trough conveyor (5) is provided with a rotating conveyor chain (7, 7') with catches (8), wherein some catches (8) are provided with fill sheets (9).

5. The ship unloader according to claim 4, **characterized in that** the catches (8) and fill sheets (9) are made out of a plastic.

## Revendications

1. Dispositif de déchargement de navires, avec une flèche (2) qui est disposée de façon à pouvoir être relevée et abaissée, ainsi que pivotée sur un portique déplaçable (3), la flèche (2) portant des dispositifs de convoyage usuels pour le transport de marchandises en vrac et comportant sur une extrémité un convoyeur à chaînes porte-godets (5) qui est muni d'un pied (10) destiné à réceptionner la marchandise en vrac, **caractérisé en ce que** le pied (10) est muni d'une sonde du niveau de remplissage (12) qui permet d'abaisser la flèche (2) en fonction du degré de remplissage du navire et la flèche (2) pouvant suivre les mouvements du navire, et **en ce que** le pied contient une cuve à alimentation conique, qui est formée par des parois inclinées (11).

2. Dispositif de déchargement de navires selon la revendication 1, **caractérisé en ce que** le convoyeur à chaînes porte-godets (5) comporte un appui sphérique (16).

3. Dispositif de déchargement de navires selon la revendication 1, **caractérisé en ce que** la flèche (2) comporte un caniveau rotatif (21).

4. Dispositif de déchargement de navires selon l'une quelconque des revendications 1 à 3, **caractérisé en ce qu'**une chaîne de convoyage (7, 7') avec des entraîneurs porte-godets (5), (8) circule en rotation dans le convoyeur à chaînes, certains entraîneurs étant munis de tôles de remplissage (9).

5. Dispositif de déchargement de navires selon la revendication 4, **caractérisé en ce que** les entraîneurs (8) et les tôles de remplissage (9) sont fabriqués en une matière plastique.
